# EUROPEAN PATENT APPLICATION

(11) **EP 4 730 414 A1**
(43) Date of publication of application: **22.04.2026**
(21) Application number: 23937543.9
(22) Date of filing: 18.05.2023
(51) Int. Cl.: H01M 4/13, H01M 4/36, H01M 4/62, H01M 4/66

(54) **POSITIVE ELECTRODE FOR LITHIUM SECONDARY BATTERY, AND LITHIUM SECONDARY BATTERY**

(71) Applicant: TERAWATT TECHNOLOGY K.K., Yokohama-shi, Kanagawa 226-0026 (JP)
(72) Inventor: NAKANO, Masatsugu, Yokohama-shi, Kanagawa 226-0026 (JP)
(74) Representative: FRKelly
(86) International application number: PCT/JP2023/018604
(87) International publication number: WO 2024/236807

(57) **Abstract**

The present invention provides a positive electrode having high safety and favorable rate characteristics in a lithium secondary battery. The present invention relates to a positive electrode for a lithium secondary battery, which includes a current collector film including a resin layer and a metal layer provided on each of both surfaces of the resin layer and a positive electrode mixture layer formed on the current collector film, in which the positive electrode mixture layer contains first positive-electrode active material particles having a median diameter D50 of 10 µm or more and 25 µm or less, second positive-electrode active material particles, and two or more kinds of binders, a median diameter D50 ratio of the second positive-electrode active material particles to the first positive-electrode active material particles is 0.75 or less, and a mass ratio of the first positive-electrode active material particles to the second positive-electrode active material particles in the positive electrode ([a content of the first positive-electrode active material particles in the positive electrode]/[a content of the second positive-electrode active material particles in the positive electrode]) is 1.5 or more and 9.0 or less.

## Description

### Technical Field

The present invention relates to a positive electrode for a lithium secondary battery, and a lithium secondary battery.

### Background Art

In recent years, a technology of converting natural energy such as sunlight or wind power into electric energy has attracted attention. In association with this fact, various secondary batteries have been developed as a power storage device that has high safety and can store a large amount of electric energy.

Among them, it is known that a lithium secondary battery in which charge/discharge are carried out by moving lithium ions between a positive electrode and a negative electrode exhibits a high voltage and a high energy density. As a typical lithium secondary battery, a lithium ion secondary battery (LIB) that has an active material capable of holding a lithium element in a positive electrode and a negative electrode and carries out charge/discharge by transfer of lithium ions between the positive-electrode active material and the negative-electrode active material is known.

For example, Patent Literature 1 discloses that the safety of a battery cell is improved by using a current collector film in which a metal layer is formed on both surfaces of a resin film.

### Citation List

### Patent Literature

Patent Literature 1: Japanese Patent Application Laid-Open No. H11-102711

### Summary of Invention

### Technical Problem

In order to achieve size reduction and high density, electrodes are pressed in the lithium ion secondary battery. However, it has been found that a positive electrode in which the current collector film described in Patent Literature 1 is used has such a problem that the battery characteristics deteriorate due to the fact that the elongation rate in a case where the current collector film is pressed is large as compared with other portions of the positive electrode.

The present invention has been made in consideration of the above-described problems, and an object of the present invention is to provide a positive electrode having high safety and favorable rate characteristics in a lithium secondary battery.

### Solution to Problem

A positive electrode for a lithium secondary battery according to one embodiment of the present invention includes a current collector film including a resin layer and a metal layer provided on each of both surfaces of the resin layer, and a positive electrode mixture layer formed on the current collector film, in which the positive electrode mixture layer contains first positive-electrode active material particles having a median diameter D50 of 10 µm or more and 25 µm or less, second positive-electrode active material particles, and two or more kinds of binders, a median diameter D50 ratio of the second positive-electrode active material particles to the first positive-electrode active material particles ([a median diameter D50 of the second positive-electrode active material particles]/[a median diameter D50 of the first positive-electrode active material particles]) is 0.75 or less, and a mass ratio of the first positive-electrode active material particles to the second positive-electrode active material particles in the positive electrode ([a content of the first positive-electrode active material particles in the positive electrode]/[a content of the second positive-electrode active material particles in the positive electrode]) is 1.5 or more and 9.0 or less.

High safety is provided due to the fact that in the lithium secondary battery, the positive electrode includes a current collector film including a resin layer and a metal layer provided on each of both surfaces of the resin layer. In addition, the inventors of the present invention have found that favorable rate characteristics are provided due to the fact that the positive electrode mixture layer contains first positive-electrode active material particles having a median diameter D50 of 10 µm or more and 25 µm or less, second positive-electrode active material particles, and two or more kinds of binders, a median diameter D50 ratio of the second positive-electrode active material particles to the first positive-electrode active material particles ([a median diameter D50 of the second positive-electrode active material particles]/[a median diameter D50 of the first positive-electrode active material particles]) is 0.75 or less, and a mass ratio of the first positive-electrode active material particles to the second positive-electrode active material particles in the positive electrode ([a content of the first positive-electrode active material particles in the positive electrode]/[a content of the second positive-electrode active material particles in the positive electrode]) is 1.5 or more and 9.0 or less. As a result, it is presumed that each of the above-described components is allowed to achieve both high safety and favorable rate characteristics of the lithium secondary battery. However, the factors are not limited thereto.

In the positive electrode for a lithium secondary battery according to one embodiment of the present invention, it is preferable that the metal layer is formed of aluminum. According to such an aspect, the lithium secondary battery tends to be more excellent in safety.

In the positive electrode for a lithium secondary battery according to one embodiment of the present invention, it is preferable that the mass ratio of the first positive-electrode active material particles to the second positive-electrode active material particles in the positive electrode ([the content of the first positive-electrode active material particles in the positive electrode]/[the content of the second positive-electrode active material particles in the positive electrode]) is 2.0 or more and 9.0 or less. According to such an aspect, the lithium secondary battery tends to be more excellent in rate characteristics.

In the positive electrode for a lithium secondary battery according to one embodiment of the present invention, it is preferable that the median diameter D50 ratio of the second positive-electrode active material particles to the first positive-electrode active material particles is 0.1 or more and 0.5 or less. According to such an aspect, the lithium secondary battery tends to be more excellent in rate characteristics.

In the positive electrode for a lithium secondary battery according to one embodiment of the present invention, it is preferable that the median diameter D50 of the first positive-electrode active material particles is 10 µm or more and 20 µm or less. According to such an aspect, the lithium secondary battery tends to be more excellent in rate characteristics.

In the positive electrode for a lithium secondary battery according to one embodiment of the present invention, it is preferable that the binder includes a first binder having vinylidene fluoride as a repeating unit and a second binder having tetrafluoroethylene as a repeating unit. According to such an aspect, the lithium secondary battery tends to be more excellent in rate characteristics.

In the positive electrode for a lithium secondary battery according to one embodiment of the present invention, it is preferable that a mass ratio of the second binder to the first binder in the positive electrode ([a content of the second binder in the positive electrode]/[a content of the first binder in the positive electrode]) is 1.0 or more and 10.0 or less. According to such an aspect, the lithium secondary battery tends to be more excellent in rate characteristics.

In the positive electrode for a lithium secondary battery according to one embodiment of the present invention, it is preferable that the positive electrode according to any one described above is provided. According to such an aspect, the safety and the rate characteristics tend to be more excellent.

### Advantageous Effect of Invention

According to the present invention, it is possible to provide a positive electrode which is allowed to achieve both high safety and favorable rate characteristics in a lithium secondary battery.

### Brief Description of Drawings

[Figure 1] Figure 1 is a view illustrating an example of a cross-sectional structure of a positive electrode according to one embodiment of the present invention.
[Figure 2] Figure 2 is a view illustrating another example of the cross-sectional structure of the positive electrode according to one embodiment of the present invention.
[Figure 3] Figure 3 is a schematic cross-sectional view of a lithium secondary battery according to one embodiment of the present invention.

### Description of Embodiments

Hereinafter, embodiments of the present invention (hereinafter, referred to as "the present embodiment") will be described in detail with reference to the drawings as necessary. However, the present invention is not limited thereto, and various modifications can be made without departing from the scope of the present invention. It is noted that in the drawings, the same reference numerals are assigned to the same elements, and duplicate descriptions will be omitted. In addition, unless otherwise specified, the positional relationship such as up, down, left, and right is based on the positional relationship illustrated in the drawings. Further, the dimensional ratios in the drawings are not limited to the illustrated ratios.

### 1. Positive electrode

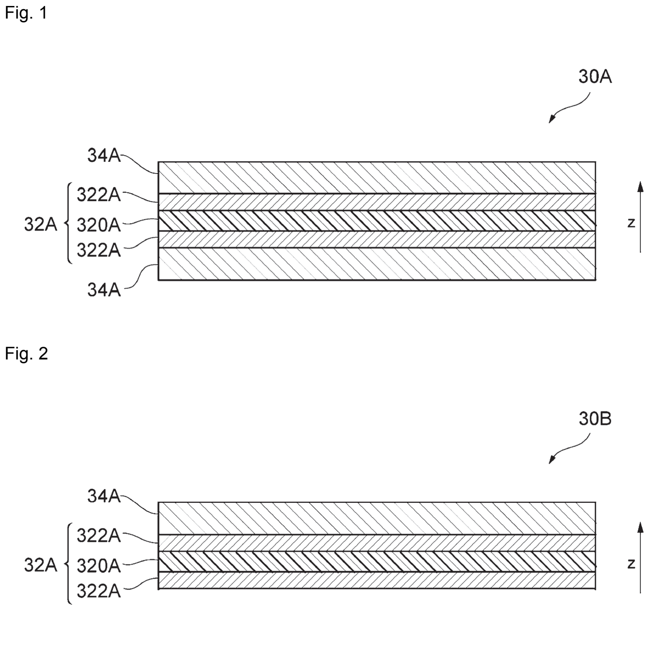

Figure 1 is a view illustrating an example of a cross-sectional structure of a positive electrode for a lithium secondary battery according to one embodiment of the present invention, and Figure 2 is a view illustrating another example thereof.

As illustrated in Figure 1, a positive electrode 30 according to the present embodiment includes a current collector film 32A including a resin layer 320A and a metal layer 322A provided on each of both surfaces of the resin layer 320A, and a positive electrode mixture layer 34A formed on the current collector film 32A, where the positive electrode mixture layer 34A includes positive-electrode active material particles L (first positive-electrode active material particles) having a median diameter D50 of 10 µm or more and 25 µm or less, positive-electrode active material particles S (second positive-electrode active material particles), and two or more kinds of binders, a median diameter D50 ratio of the positive-electrode active material particles S to the positive-electrode active material particles L is 0.75 or less, and a mass ratio of the positive-electrode active material particles L to the positive-electrode active material particles S in the positive electrode ([a content of the positive-electrode active material particles L in the positive electrode]/[a content of the positive-electrode active material particles S in the positive electrode]) is 1.5 or more and 9.0 or less.

As illustrated in Figure 1, the positive electrode mixture layer 34A may be formed on both surfaces of the current collector film 32A to form a positive electrode 30A, or as illustrated in Figure 2, the positive electrode mixture layer 34A may be formed on at least one surface of the current collector film 32A to form a positive electrode 30B. It is noted that in the present specification, a positive electrode having an aspect including both the positive electrode 30A and the positive electrode 30B is referred to as the positive electrode 30.

In a case where the current collector film 32A includes the resin layer 320A and the metal layer 322A provided on each of both surfaces of the resin layer 320A, the resin layer 320A can function so that the resin layer 320A melts to block a short-circuit current inside the battery in a case where abnormal heat generation occurs in an overcharged state, a high temperature state, or the like. As a result, a rapid temperature rise inside the battery is suppressed, and the ignition of the battery is suppressed, which tends to contribute to high safety.

In addition, since the current collector film 32A contains a resin having a density lower than that of a metal and has a reduced weight per volume as compared with a current collector including only a metal layer, a lithium secondary battery that uses the current collector film 32A tends to have an excellent energy density per weight.

In a case of producing a lithium secondary battery, it is often carried out to press a positive electrode in order to achieve size reduction or high density, thereby reducing the volume of the positive electrode. In a case where a comparison is made between a case where the positive electrode includes only a metal layer as a current collector and a case where the positive electrode includes a current collector film including a resin layer and a metal layer provided on each of both surfaces of the resin layer, there is such a tendency that in a case where the positive electrode is pressed, the current collector film is elongated in a direction perpendicular to the pressing direction as compared with the current collector including only the metal layer, that is, the strain increases. This is presumed to be because the resin tends to have a smaller Young's modulus than the metal, and thus the current collector film including a resin layer and a metal layer has a smaller Young's modulus than the current collector including only the metal layer. However, the factors are not limited thereto.

As described above, in a case where the current collector film is elongated, a layer containing the positive-electrode active material, which is formed on the current collector film, also attempts to elongate in association with the elongation of the current collector film; however, the layer cannot completely follow this elongation since the Young's modulus of the layer containing the positive-electrode active material is relatively large. Therefore, cracking or the like occurs in the layer containing the positive-electrode active material, and as a result, the characteristics of the positive electrode deteriorate, and the cycle characteristics of the lithium secondary battery tend to deteriorate. This is presumed to be because, as a result of the layer containing the positive-electrode active material not being able to follow the elongation of the current collector film including a resin layer and a metal layer provided on each of both surfaces of the resin layer, cracking occurs in the layer containing the positive-electrode active material, and thus the conduction path of electrons in the layer containing the positive-electrode active material is cut. However, the factors are not limited thereto.

On the other hand, in a case where pressing is not carried out or the pressure of the pressing is reduced in order to avoid the deterioration of the cycle characteristics of the lithium secondary battery due to pressing a positive electrode that has a current collector film including a resin layer and a metal layer provided on each of both surfaces of the resin layer, and a layer containing a positive-electrode active material formed on the current collector film, it is impossible to achieve the size reduction or the high density of the lithium secondary battery, and as a result, the energy density tends to decrease.

As a result of intensive studies, the inventors of the present invention have found that, in a case of using, as a layer containing a positive-electrode active material, the positive electrode mixture layer 34A which contains the positive-electrode active material particles L having a median diameter D50 of 10 µm or more and 25 µm or less, and the positive-electrode active material particles S, and in which a median diameter D50 ratio of the positive-electrode active material particles S to the positive-electrode active material particles L is 0.75 or less, and a mass ratio of the positive-electrode active material particles L to the positive-electrode active material particles S in the positive electrode ([a content of the positive-electrode active material particles L in the positive electrode]/[a content of the positive-electrode active material particles S in the positive electrode]) is 1.5 or more and 9.0 or less, it is possible to achieve all of a high energy density per volume, favorable cycle characteristics, and favorable rate characteristics even in a case of using the current collector film 32A according to the present embodiment. The factors thereof are presumed as follows, which are not limited thereto.

It is possible to further reduce the volume at the same pressing pressure in a case of using the positive electrode mixture layer 34A which contains two kinds of positive-electrode active material particles having an appropriately large D50 and positive-electrode active material particles having a small D50, and in which two kinds of the positive-electrode active material particles are present at an appropriate mass ratio, as compared with a case where the positive-electrode active material particles in the layer containing the positive-electrode active material have a uniform median diameter D50 (hereinafter, also referred to as "D50"). This is considered to be because, in a case where the positive electrode is pressed, the positive-electrode active material particles having a small D50 enter the gaps between the positive-electrode active material particles having an appropriately large D50. As a result, in a case of using the positive electrode mixture layer 34A which contains two kinds of positive-electrode active material particles having an appropriately large D50 and positive-electrode active material particles having a small D50, and in which two kinds of the positive-electrode active material particles are present at an appropriate mass ratio, it is possible to achieve the size reduction and the high density of the positive electrode at a low pressing pressure, and as a result, it tends to be possible to improve the energy density per volume of the lithium secondary battery. In addition, in a case where the pressing pressure is low, the elongation of the current collector film 32A including the resin layer 320A and the metal layer 322A provided on each of both surfaces of the resin layer 320A is also small, and thus the positive electrode mixture layer 34A can follow the elongation of the current collector film 32A, and the characteristics of the positive electrode are not deteriorated, and as a result, the cycle characteristics and the rate characteristics of the lithium secondary battery tend to be improved.

In addition, in a case where the positive electrode mixture layer 34A containing a binder is used as a layer containing a positive-electrode active material, the Young's modulus of the positive electrode mixture layer 34A is smaller, and in a case where the positive electrode 30 is pressed, the positive electrode mixture layer 34A is likely to follow the elongation of the current collector film 32A, and thus the characteristics of the positive electrode tend to be not deteriorated even in a case where the positive electrode 30 is pressed with a larger pressure. As a result, it is possible to press the positive electrode 30 with a higher pressure, and the energy density per volume tends to be higher. However, the factors thereof are not limited to those described above.

As a result, it is considered that the lithium secondary battery including the positive electrode 30 according to the present embodiment is allowed to achieve all of high safety, a high energy density per weight, a high energy density per volume, favorable cycle characteristics, and favorable rate characteristics. However, the factors are not limited to those described above.

The average thickness of the positive electrode 30 after pressing is not particularly limited; however, it is, for example, 50 µm or more and 500 µm or less, 100 µm or more and 400 µm or less, and 150 µm or more and 350 µm or less.

The density of the positive electrode 30 after pressing is preferably 2.5 g/cc or more and 7.5 g/cc or less, 3.0 g/cc or more and 6.5 g/cc or less, or 3.3 g/cc or more and 5.0 g/cc or less.

Hereinafter, each component contained in the positive electrode 30 will be described in detail.

### 1.1. Current collector film

The current collector film 32A according to the present embodiment includes the resin layer 320A and the metal layer 322A provided on each of both surfaces of the resin layer 320A. The metal layer 322A is formed on the surfaces of both sides of the resin layer 320A by vapor deposition, sputtering, electrolytic plating, or bonding with an adhesive agent or the like. In a case where the current collector film 32A is used, the safety and the energy density per weight tend to be excellent.

The thickness of the current collector film 32A before pressing is not particularly limited; however, it may be, for example, 4.0 µm or more and 20.0 µm or less, may be 5.0 µm or more and 17.5 µm or less, or may be 5.5 µm or more and 15.0 µm or less.

### 1.1.1. Resin layer

The resin layer 320A according to the present embodiment is an insulator, and it prevents the metal layer 322A provided on each of both surfaces of the resin layer 320A from being in conduction with each other. The resin that constitutes the resin layer 320A is not particularly limited; however, it may be composed of, for example, a sheet-shaped (film-shaped) or fibrous resin. The resin is not particularly limited, and examples thereof include polyethylene terephthalate (PET), a polyolefin resin such as polyethylene or polypropylene, and a thermoplastic resin such as polystyrene, polyvinyl chloride, or polyamide. One kind of the resin in the resin layer 320A may be used alone, or two or more kinds thereof may be used in combination. In addition, the above-described resins may be mixed and then formed into one resin layer 320A, or each of the above-described resins may be used alone to form a layer, and then a plurality of layers may be combined to form one resin layer 320A.

The resin layer 320A may contain other additives as appropriate in addition to the above-described resin, depending on the desired physical properties. The additive is not particularly limited, and examples thereof include a coloring agent, a flame retardant, a surfactant, and the like.

The content of the resin in the resin layer 320A is not particularly limited; however, for example, it may be 60% by mass or more and 100% by mass or less, may be 80% by mass or more and 100% by mass or less, may be 90% by mass or more and 100% by mass or less, or may be 95% by mass or more and 100% by mass or less with respect to the total amount of the resin layer 320A.

The thickness of the resin layer 320A before pressing is not particularly limited; however, it may be, for example, 2.0 µm or more and 12.0 µm or less, and may be 3.0 µm or more and 10.0 µm or less.

### 1.1.2. Metal layer

The metal layer 322A according to the present embodiment is in physical and/or electrical contact with the positive electrode mixture layer 34A described later and functions to transfer electrons to and from the positive electrode mixture layer 34A. The metal layer 322A is composed of a conductor such as a metal that does not react with lithium in a battery. The metal that constitutes the metal layer 322A is not particularly limited; however, it is at least one selected from the group consisting of aluminum, titanium, stainless steel, nickel, and alloys thereof. Among these, aluminum or an aluminum alloy is preferable, and aluminum is particularly preferable. One kind of the metal may be used alone, or two or more kinds thereof may be used in combination.

The thickness of each metal layer 322A before pressing is not particularly limited; however, it may be, for example, 0.2 µm or more and 5.0 µm or less, may be 0.3 µm or more and 4.0 µm or less, or may be 0.5 µm or more and 3.0 µm or less.

### 1.2. Positive electrode mixture layer

The positive electrode mixture layer 34A according to the present embodiment contains the positive-electrode active material particles L and the positive-electrode active material particles S, as well as a binder, which are described later, and it may further contain a conductive auxiliary agent, a positive-electrode sacrificial agent, and other components.

### 1.2.1. Positive-electrode active material particles

The positive-electrode active material particles according to the present embodiment are particles formed of a positive-electrode active material. The positive-electrode active material is a material that causes an electrode reaction in a positive electrode, that is, an oxidation reaction and a reduction reaction. Specifically, examples of the positive-electrode active material according to the present embodiment include a host material of a lithium element (typically, a lithium ion). Such a positive-electrode active material is not particularly limited; however, examples thereof include a metal oxide and a metal phosphate. The metal oxide is not particularly limited, and examples thereof include a cobalt oxide-based compound, a manganese oxide-based compound, a nickel oxide-based compound, and the like. The above-described metal phosphate is not particularly limited, and examples thereof include an iron phosphate-based compound and a cobalt phosphate-based compound.

Examples of the typical positive-electrode active material include LiCoO₂, Li_{z}NiₓCoyM_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is at least one element selected from Mn, Al, V, Mg, Mo, Nb, Ti, Zr, Fe, Cu, Cr, Zn, F, or B; in addition, this compound is also referred to as "LiNCM" hereinafter), LiNiₓMn_{y}O (x + y = 1), LiNiO₂, LiMn₂O₄, LiFePO, LiCoPO, LiFeOF, LiNiOF, and TiS₂. One kind of such a positive-electrode active material as described above may be used alone, or two or more kinds thereof may be used in combination.

The positive-electrode active material particles according to the present embodiment include positive-electrode active material particles L (hereinafter, also referred to as "particles L") having a median diameter D50 (hereinafter, also referred to as "D50") of 10 µm or more and 25 µm or less, and positive-electrode active material particles S (hereinafter, also referred to as "particles S"), where a D50 ratio of the particles S to the particles L is 0.75 or less, and a mass ratio of the particles L to the particles S in the positive electrode ([a content of the particles L in the positive electrode]/[a content of the particles S in the positive electrode]) is 1.5 or more and 9.0 or less. It is noted that the "median diameter" is a particle diameter corresponding to a cumulative degree of 50% in a particle size distribution measured by a laser diffraction/scattering method, and it is a particle diameter which is determined so that the number of particles having a particle diameter larger than the median diameter and the number of particles having a particle diameter smaller than the median diameter are the same.

In addition, the particle size distribution can be measured according to a publicly known method. More specifically, the particle size distribution can be measured with, for example, a laser diffraction type particle size distribution measuring instrument, which is not particularly limited.

The D50 of the particles L is 10.0 µm or more and 25.0 µm or less, preferably 11.0 µm or more and 24.0 µm or less, 12.0 µm or more and 23.0 µm or less, or 13.0 µm or more and 22.0 µm or less. In addition, the D50 of the particles L is preferably 10.0 µm or more and 20.0 µm or less. In a case where the D50 of the particles L is within the above-described numerical value range, the energy density per volume, the cycle characteristics, and the rate characteristics tend to be further improved.

The D50 of the particles S is preferably 0.5 µm or more and 19.0 µm or less, 0.5 µm or more and 15.0 µm or less, 0.5 µm or more and 10.0 µm or less, 1.0 µm or more and 9.0 µm or less, 2.0 µm or more and 8.0 µm or less, 2.5 µm or more and 7.5 µm or less, 3.0 µm or more and 7.0 µm or less, or 3.5 µm or more and 6.5 µm or less. In addition, the D50 of the particles S is preferably 0.5 µm or more and less than 10.0 µm. In a case where the D50 of the particles S is within the above-described numerical value range, the energy density per volume, the cycle characteristics, and the rate characteristics tend to be further improved.

A D50 ratio of the particles S to the particles L ([median diameter D50 of particles S]/[median diameter D50 of particles L]) is 0.75 or less, and preferably 0.05 or more and 0.75 or less, 0.10 or more and 0.60 or less, 0.10 or more and 0.50 or less, 0.15 or more and 0.45 or less, or 0.20 or more and 0.40 or less. In a case where the D50 ratio of the particles S to the particles L is within the above-described numerical value range, the energy density per volume, the cycle characteristics, and the rate characteristics tend to be further improved.

In the particle L, a particle diameter D90 (hereinafter, also referred to as "D90") corresponding to a cumulative degree of 90% in a particle size distribution measured by a laser diffraction/scattering method is preferably 25.0 µm or less, 13.0 µm or more and 25.0 µm or less, 13.5 µm or more and 24.5 µm or less, or 14.0 µm or more and 24.0 µm or less. In a case where the D90 of the particles L is within the above-described numerical value range, the energy density per volume, the cycle characteristics, and the rate characteristics tend to be further improved.

In the particle S, D90 is preferably 19.0 µm or less, 15.0 µm or less, 10.0 µm or less, 1.5 µm or more and 9.0 µm or less, 2.0 µm or more and 8.0 µm or less, 2.5 µm or more and 7.5 µm or less, 3.0 µm or more and 6.5 µm or less, or 3.5 µm or more and 6.0 µm or less. In a case where the D90 of the particles S is within the above-described numerical value range, the energy density per volume, the cycle characteristics, and the rate characteristics tend to be further improved.

The particles L are preferably so that 75% or more of the number of particles are present in the range of D50 ± 0.5 µm, 80% or more of the number of particles are present in the range of D50 ± 0.5 µm, 85% or more of the number of particles are present in the range of D50 ± 0.5 µm, 90% or more of the number of particles are present in the range of D50 ± 0.5 µm, and 95% or more of the number of particles are present in the range of D50 ± 0.5 µm.

The particles S are preferably so that 75% or more of the number of particles are present in the range of D50 ± 0.5 µm, 80% or more of the number of particles are present in the range of D50 ± 0.5 µm, 85% or more of the number of particles are present in the range of D50 ± 0.5 µm, 90% or more of the number of particles are present in the range of D50 ± 0.5 µm, and 95% or more of the number of particles are present in the range of D50 ± 0.5 µm.

In a case where a particle size distribution of a mixture of the particles L and the particles S is measured, the particle size distribution is not particularly limited; however, for example, a local maximal value may be present in a region where the particle diameter is 10.0 µm or more, and a local maximal value may be present in a region where the particle diameter is equal to or less than 0.75 times the particle diameter in a case where the above local maximal value is taken. In this case, in addition, any one of the two local maximal values described above may be the maximum value, and the other may be the second largest peak in the particle size distribution. Alternatively, a local maximal value may be present in a region where the particle diameter is 10.0 µm or more, and a local maximal value may be present in a region where the particle diameter is 7.5 µm or less. In this case, in addition, any one of the local maximal value in the region where the particle diameter is 10.0 µm or more or the local maximal value in the region where the particle diameter is 7.5 µm or less may be the maximum value in the particle size distribution, and the other may be the second largest peak. Alternatively, a local maximal value may be present in a region where the particle diameter is 12.0 µm or more, and a local maximal value may be present in a region where the particle diameter is 5.0 µm or less. In this case, in addition, any one of the local maximal value in the region where the particle diameter is 12.0 µm or more or the local maximal value in the region where the particle diameter is 5.0 µm or less may be the maximum value in the particle size distribution, and the other may be the second largest peak.

The content of the particles L is preferably 30.0% by mass or more and 90.0% by mass or less, 40.0% by mass or more and 85.0% by mass or less, 50.0% by mass or more and 80.0% by mass or less, 55.0% by mass or more and 77.5% by mass or less, or 60.0% by mass or more and 75.0% by mass or less with respect to the total amount of the positive electrode mixture layer 34A. In a case where the content of the particles L is within the above-described numerical value range, the energy density per volume, the cycle characteristics, and the rate characteristics tend to be further improved.

The content of the particles S is preferably 5.0% by mass or more and 50.0% by mass or less, 7.5% by mass or more and 45.0% by mass or less, 10.0% by mass or more and 42.5% by mass or less, 11.0% by mass or more and 40.0% by mass or less, or 12.0% by mass or more and 37.5% by mass or less with respect to the total amount of the positive electrode mixture layer 34A. In a case where the content of the particles S is within the above-described numerical value range, the energy density per volume, the cycle characteristics, and the rate characteristics tend to be further improved.

The content of the positive-electrode active material particles is preferably 60.0% by mass or more and 99.0% by mass or less, 70.0% by mass or more and 98.5% by mass or less, 80.0% by mass or more and 98.0% by mass or less, or 85.0% by mass or more and 97.5% by mass or less with respect to the total amount of the positive electrode mixture layer 34A. In a case where the content of the positive-electrode active material particles is within the above-described numerical value range, the energy density per volume, the cycle characteristics, and the rate characteristics tend to be further improved.

The mass ratio of the particles L to the particles S in the positive electrode 30 ([content of particles L in positive electrode 30]/[content of particles S in positive electrode 30]) is 1.5 or more and 9.0 or less, and preferably 2.0 or more and 9.0 or less, 2.1 or more and 8.0 or less, or 2.2 or more and 7.0 or less. In a case where the mass ratio of the particles L to the particles S is within the above-described numerical value range, the energy density per volume, the cycle characteristics, and the rate characteristics tend to be further improved.

### 1.2.2. Binder

The positive electrode mixture layer 34A according to the present embodiment contains two or more kinds of binders. Since the binder is contained, the elongation in a case where a force is applied to the positive electrode mixture layer 34A is improved, that is, the Young's modulus is reduced, and in a case where the positive electrode 30 including the current collector film 32A and the positive electrode mixture layer 34A formed on the current collector film 32A is pressed, the positive electrode mixture layer 34A tends to be easily follow the elongation of the current collector film 32A, and the characteristics of the positive electrode tend to be not deteriorated even in a case where the positive electrode 30 is pressed with a larger pressure. As a result, it is possible to press the positive electrode 30 with a higher pressure, and the energy density per volume tends to be higher.

The binder is not particularly limited, and examples thereof include a binder 1 (first binder) having vinylidene fluoride as a repeating unit, a binder 2 (second binder) having tetrafluoroethylene as a repeating unit, styrene butadiene rubber, an acrylic resin, a polyimide resin, and the like. Among these, the binder 1 or the binder 2 is preferable, and it is more preferable to use the binder 1 and the binder 2 in combination.

The binder 1 is not particularly limited, and examples thereof include polyvinylidene fluoride which is a homopolymer of vinylidene fluoride, and a modified polyvinylidene fluoride obtained by introducing a functional group such as a hydroxyl group, an amino group, a carbonyl group, a carboxyl group, a phenyl group, or a methyl group into polyvinylidene fluoride. In a case where the positive electrode mixture layer 34A contains the binder 1, the positive electrode mixture layer 34A tends to be more easily bound to the current collector film 32A. One kind of such a binder 1 as described above may be used alone, or two or more kinds thereof may be used in combination.

The binder 2 is not particularly limited, and examples thereof include polytetrafluoroethylene which is a homopolymer of tetrafluoroethylene; a modified polytetrafluoroethylene obtained by introducing, into polytetrafluoroethylene, a functional group such as a hydroxyl group, an amino group, a carbonyl group, a carboxyl group, a phenyl group, or a methyl group; a block copolymer, a random copolymer, or a graft copolymer, which has, as a repeating unit, tetrafluoroethylene and vinylidene fluoride; a block copolymer, a random copolymer, or a graft copolymer, which has, as a repeating unit, tetrafluoroethylene and hexafluoropropene; a block copolymer, a random copolymer, or a graft copolymer, which has, as a repeating unit, tetrafluoroethylene, vinylidene fluoride, and hexafluoropropene. In a case where the positive electrode mixture layer 34A contains the binder 2, the flexibility of the positive electrode active mixture layer 34A is improved, and the Young's modulus is reduced. Therefore, the positive electrode mixture layer 34A is likely to follow the elongation of the current collector film 32A, and the energy density per volume tends to be further increased in a case where the positive electrode 30 including the current collector film 32A and the positive electrode mixture layer 34A formed on the current collector film 32A is pressed. One kind of such a binder 2 as described above may be used alone, or two or more kinds thereof may be used in combination.

The binder may be synthesized by a publicly known method, or a commercially available product may be used. The commercially available product of the binder 1 is not particularly limited, and examples thereof include PVDF (2F) manufactured by Kureha Extron Co., Ltd., and Solef (registered trademark) manufactured by Solvay Japan Ltd. The commercially available product of the binder 2 is not particularly limited, and examples thereof include Dyneon fluororubber, manufactured by 3M Company.

In a case where the positive electrode mixture layer 34A contains the binder 1, the content of the binder 1 is preferably 0.3% by mass or more and 20.0% by mass or less, 0.5% by mass or more and 15.0% by mass or less, 1.0% by mass or more and 10.0% by mass or less, or 1.5% by mass or more and 7.5% by mass or less with respect to the total amount of the positive electrode mixture layer 34A. In a case where the content of the binder 1 is within the above-described range, the positive electrode mixture layer 34A tends to be more easily bound to the current collector film 32A.

In a case where the positive electrode mixture layer 34A contains the binder 2, the content of the binder 2 is preferably 0.3% by mass or more and 20.0% by mass or less, 0.5% by mass or more and 15.0% by mass or less, 1.0% by mass or more and 10.0% by mass or less, or 1.5% by mass or more and 7.5% by mass or less with respect to the total amount of the positive electrode mixture layer 34A. In a case where the content of the binder 2 is within the above-described range, the positive electrode mixture layer 34A is likely to follow the elongation of the current collector film 32A, and the energy density per volume tends to be further increased in a case where the positive electrode 30 including the current collector film 32A and the positive electrode mixture layer 34A formed on the current collector film 32A is pressed.

The content of the binder is preferably 0.5% by mass or more and 20.0% by mass or less, 1.0% by mass or more and 15.0% by mass or less, 1.5% by mass or more and 10.0% by mass or less, or 2.0% by mass or less and 7.5% by mass or less with respect to the total amount of the positive electrode mixture layer 34A. In a case where the content of the binder is within the above-described range, the positive electrode mixture layer 34A is likely to follow the elongation of the current collector film 32A, and the energy density per volume tends to be further increased in a case where the positive electrode 30 including the current collector film 32A and the positive electrode mixture layer 34A formed on the current collector film 32A is pressed.

In a case where the positive electrode mixture layer 34A contains the binder 1 and the binder 2, the mass ratio of the binder 2 to the binder 1 in the positive electrode 30 ([content of binder 2 in positive electrode 30]/[content of binder 1 in positive electrode 30]) is preferably 1.0 or more and 10.0 or less, 1.0 or more and 5.0 or less, 1.0 or more and 2.5 or less, or 1.0 or more and 2.0 or less.

### 1.2.3. Conductive auxiliary agent

The positive electrode mixture layer 34A according to the present embodiment may contain a conductive auxiliary agent. The conductive auxiliary agent is not particularly limited, and examples thereof include carbon black, single-walled carbon nanotube (SWCNT), multi-walled carbon nanotube (MWCNT), carbon nanofiber (CF), and acetylene black. One kind of such a conductive auxiliary agent as described above may be used alone, or two or more kinds thereof may be used in combination.

The content of the conductive auxiliary agent is not particularly limited; however, it is, for example, 0.5% by mass or more and less than 30.0% by mass with respect to the total amount of the positive electrode mixture layer 34A.

### 1.2.4. Positive-electrode sacrificial agent

The positive electrode mixture layer 34A according to the present embodiment may contain a positive-electrode sacrificial agent. The positive-electrode sacrificial agent according to the present embodiment is a lithium-containing compound that causes an oxidation reaction and does not substantially cause a reduction reaction in a charge/discharge potential range of a positive-electrode active material. In a case where the positive electrode 30 according to the present embodiment contains a positive-electrode sacrificial agent, the positive-electrode active material and the positive-electrode sacrificial agent release lithium ions and cause an oxidation reaction in a case where a lithium secondary battery including the positive electrode 30 is subjected to initial charging, and then electrons are released to the negative electrode through the external circuit. As a result, lithium ions derived from the positive-electrode active material and the positive-electrode sacrificial agent are deposited on the surface of the negative electrode. In addition, in a case where such a lithium secondary battery is discharged after initial charging is completed (that is, after being subjected to initial discharging), a lithium metal deposited on the negative electrode surface is electrolytically dissolved, and electrons move from the negative electrode to the positive electrode 30 through the external circuit. In association with this fact, the positive-electrode active material receives lithium ions and causes a reduction reaction, whereas the positive-electrode sacrificial agent does not substantially cause a reduction reaction within the range of the discharging potential of the positive-electrode active material, which makes it substantially impossible to return to a state before the oxidation reaction occurs. As a result, in a case where the lithium secondary battery is discharged after initial charging, a lithium metal derived from the positive-electrode active material is electrolytically dissolved from the negative electrode, whereas most of the lithium metal derived from the positive-electrode sacrificial agent remains on the negative electrode, and thus a part of the lithium metal remains on the negative electrode even after the completion of the discharging of the battery. The residual lithium metal serves as a scaffold in a case where further lithium metal is deposited on the negative electrode in the charging step that follows the initial discharging, and thus the lithium metal is likely to be uniformly deposited on the negative electrode in the charging step after the initial discharging. As a result, the lithium secondary battery tends to have excellent cycle characteristics.

The positive-electrode sacrificial agent is not particularly limited, and examples thereof include a lithium oxide such as Li₂O₂; a lithium nitride such as Li₃N; a lithium sulfide-based solid solution such as Li₂S-P₂S₅, Li₂S-LiCl, Li₂S-LiBr, or Li₂S-Lil; an iron-based lithium oxide such as Li₁₊ₓ(Ti_{1-y}Fe_{y})₁₋ₓO₂ (0 < x ≤ 0.25, 0.4 < y ≤ 0.9), Li₂₋ₓTi_{1-z}Fe_{z}O_{3-y} (0 ≤ x < 2, 0 ≤ y ≤ 1, 0.05 ≤ z ≤ 0.95), or Li₅FeO₄; and the like. One kind of such a positive-electrode sacrificial agent as described above may be used alone, or two or more kinds thereof may be used in combination.

The content of the positive-electrode sacrificial agent is not particularly limited; however, it is, for example, 1.0% by mass or more and 30.0% by mass or less, 2.0% by mass or more and 20.0% by mass or less, or 3.0% by mass or more and 15.0% by mass or less with respect to the total amount of the positive electrode mixture layer 34A.

In addition, in a case where the positive electrode mixture layer 34A contains a positive-electrode sacrificial agent, the total amount of the positive-electrode active material particles and the positive-electrode sacrificial agent is preferably 60.0% by mass or more and 99.0% by mass or less, 70.0% by mass or more and 98.5% by mass or less, 80.0% by mass or more and 98.0% by mass or less, or 85.0% by mass or more and 97.5% by mass or less with respect to the total amount of the positive electrode mixture layer 34A.

### 1.3. Manufacturing method for positive electrode

The positive electrode 30 according to the present embodiment is not particularly limited; however, it is manufactured, for example, as follows. The metal layer 322A is formed on the surfaces of both sides of the resin layer 320A by vapor deposition, sputtering, electrolytic plating, or bonding with an adhesive agent or the like, thereby obtaining the current collector film 32A according to the present embodiment. Then, the positive-electrode active material particles L, the positive-electrode active material particles S, and two or more kinds of binders, which are described above, as well as, as necessary, a conductive auxiliary agent, a positive-electrode sacrificial agent, and the like are mixed to obtain a positive electrode mixture. The obtained positive electrode mixture is applied onto both surfaces or one surface of the current collector film 32A, and press molding is carried out to form the positive electrode mixture layer 34A on both surfaces or one surface of the current collector film 32A, thereby obtaining a molded body. The obtained molded body is punched into a predetermined size by punching processing to obtain the positive electrode 30 according to the present embodiment. Thereafter, the obtained positive electrode 30 may be further pressed as necessary.

The pressure in a case of carrying out press molding is not particularly limited; however, for example, the linear pressure is 0.8 to 3.5 t/cm, 1.0 to 3.0 t/cm, 1.2 to 2.8 t/cm, or 1.5 to 2.5 t/cm.

### 2. Lithium secondary battery

The lithium secondary battery according to the present embodiment includes the above-described positive electrode 30. In a case where the lithium secondary battery includes the above-described positive electrode 30, the lithium secondary battery is allowed to have high safety, a high energy density per weight, a high energy density per volume, favorable cycle characteristics, and favorable rate characteristics.

The kind of the lithium secondary battery is not particularly limited as long as the lithium secondary battery is a battery in which charge/discharge are carried out by an oxidation-reduction reaction of lithium and which has the positive electrode 30, and examples of the lithium secondary battery include a lithium ion battery, a lithium metal battery, an anode-free type lithium secondary battery, a lithium sulfur battery, a lithium oxygen battery, a lithium air battery, and the like.

Hereinafter, various lithium secondary batteries will be described in detail.

### 2.1. Anode-free type battery

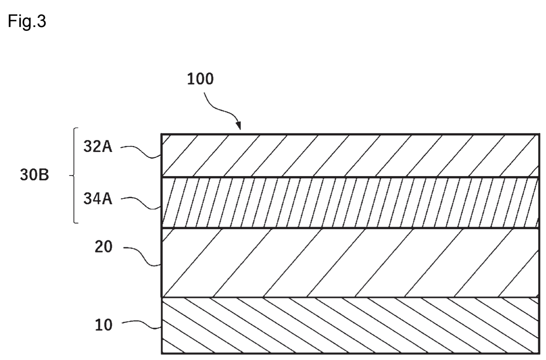

Figure 3 is a schematic cross-sectional view of a lithium secondary battery according to one embodiment of the present invention. As illustrated in Figure 3, an anode-free type battery 100 according to the present embodiment includes a positive electrode 30B, a negative electrode 10 not having a negative-electrode active material, a separator 20 which is disposed between the positive electrode 30B and the negative electrode 10, and an electrolyte solution (not illustrated in Figure 3). The positive electrode 30B has a positive electrode current collector 32A on a surface opposite to the surface facing the separator 20, and it has a positive electrode mixture layer 34A on a surface facing the separator 20. Hereinafter, each configuration of the anode-free type battery 100 will be described.

The anode-free type lithium secondary battery according to the present embodiment (hereinafter, also referred to as an "anode-free type battery" or "AFB") has a negative electrode 10 consisting of a negative electrode current collector not having a negative-electrode active material, and it uses the above-described electrolyte solution as an electrolyte solution. The negative-electrode active material is a material that causes an electrode reaction in a negative electrode, that is, an oxidation reaction and a reduction reaction. Specific examples of the negative-electrode active material according to the present embodiment include a lithium metal and a host material of a lithium element (a lithium ion or a lithium metal). The host material of the lithium element means a material which is provided to hold a lithium ion or a lithium metal at a negative electrode. Examples of such a holding mechanism include intercalation, alloying, absorption of metal clusters, and the like, and the holding mechanism is typically, intercalation.

In the anode-free type battery, before the initial charging of the battery, the negative electrode 10 does not have a negative-electrode active material and consists of only a negative electrode current collector. As a result, after the initial charging of the battery, the lithium metal is deposited on the negative electrode 10, and the deposited lithium metal is electrolytically dissolved to carry out charge/discharge. As a result, the anode-free type battery has such an advantage that the energy density is high in principle because the volume occupied by the negative-electrode active material and the mass of the negative-electrode active material are reduced, and the volume and the mass of the entire battery are reduced.

### 2.1.1. Negative electrode

The anode-free type battery includes a negative electrode 10 consisting of a negative electrode current collector not having a negative-electrode active material.

In the anode-free type battery of the present specification, the phrase "the negative electrode does not have a negative-electrode active material" means that the negative electrode does not have a negative-electrode active material or substantially does not have a negative-electrode active material. The fact that the negative electrode 10 does not substantially have a negative-electrode active material means that the content of the negative-electrode active material in the negative electrode 10 is 10.0% by mass or less with respect to the entire negative electrode 10. The content of the negative-electrode active material in the negative electrode 10 of the anode-free type battery is preferably 5.0% by mass or less, 1.0% by mass or less, 0.1% by mass or less, or 0.0% by mass with respect to the entire negative electrode 10. In a case where the negative electrode 10 does not have a negative-electrode active material or the content of the negative-electrode active material in the negative electrode 10 is within the above-described range, the energy density of the lithium secondary battery is high.

In addition, in the anode-free type battery of the present specification, the phrase "the battery is before initial charging" means a state from the assembly of the battery to the first charging. In addition, the term "the battery is at the end of discharging" means that the voltage of the battery is in a state of preferably 1.0 V or more and 3.8 V or less, or 1.0 V or more and 3.0 V or less.

In the anode-free type battery according to the present embodiment, in a case where the voltage of the battery is 1.0 V or more and 3.5 V or less, the content of the lithium metal may be 10.0% by mass or less with respect to the entire negative electrode 10 (preferably 5.0% by mass or less and 1.0% by mass or less); in a case where the voltage of the battery is 1.0 V or more and 3.0 V or less, the content of the lithium metal may be 10.0% by mass or less with respect to the entire negative electrode 10 (preferably 5.0% by mass or less and 1.0% by mass or less); or in a case where the voltage of the battery is 1.0 V or more and 2.5 V or less, the content of the lithium metal may be 10.0% by mass or less with respect to the entire negative electrode 10 (may be preferably 5.0% by mass or less and 1.0% by mass or less).

In addition, in the anode-free type battery according to the present embodiment, a ratio M_{3.0}/M_{4.2} of a mass M_{3.0} of the lithium metal deposited on the negative electrode 10 in a state where the voltage of the battery is 3.0 V to a mass M_{4.2} of the lithium metal deposited on the negative electrode 10 in a state where the voltage of the battery is 4.2 V is preferably 40.0% or less, 38.0% or less, or 35.0% or less. The ratio M_{3.0}/M_{4.2} may be 1.0% or more, may be 2.0% or more, may be 3.0% or more, or may be 4.0% or more.

It is noted that examples of the negative-electrode active material include a lithium metal, an alloy containing lithium metal, a carbon-based material, and a metal oxide, as well as a metal which is alloyed with lithium, an alloy containing the metal, and the like. The carbon-based material is not particularly limited, and examples thereof include graphene, graphite, hard carbon, carbon nanotube, and the like. The metal oxide is not particularly limited, and examples thereof include a titanium oxide-based compound, a cobalt oxide-based compound, and the like. Examples of the metal which is alloyed with the lithium include silicon, germanium, tin, lead, aluminum, and gallium. In addition, a negative electrode active material composition may be produced by mixing a negative-electrode active material, a binder such as carboxymethyl cellulose (CMC) or styrene-butadiene rubber (SBR), and carbon black such as a carbon black.

The negative electrode 10 of the anode-free type battery is not particularly limited as long as it does not have a negative-electrode active material and can be used as a current collector, and examples thereof include those consisting of at least one kind of metal selected from the group consisting of Cu, Ni, Ti, Fe, and another metal that does not react with Li, as well as an alloy thereof and stainless steel (SUS), and preferred examples thereof include those consisting of at least one kind of metal selected from the group consisting of Cu, Ni, and an alloy thereof, as well as stainless steel (SUS). In a case where such a negative electrode is used, the energy density and the productivity of the battery tend to be further improved. Regarding such a negative electrode material as described above, one kind thereof is used alone, or two or more kinds thereof are used in combination. It is noted that in the present specification, the phrase "metal that does not react with Li" means a metal that does not react with a lithium ion or a lithium metal to form an alloy under the operating conditions of the lithium secondary battery.

In addition, the negative electrode current collector may include a resin layer and a metal layer provided on each of both surfaces of the resin layer, similarly to the current collector film 32A of the positive electrode 30. The metal layer is not particularly limited as long as it does not have a negative-electrode active material and can be used as a current collector, and examples thereof include those described above. As the resin layer, those described in the current collector film of the positive electrode can be used.

The average thickness of the negative electrode 10 of the anode-free type battery is not particularly limited; however, it is, for example, 3.0 µm or more and 30.0 µm or less. From the viewpoint of reducing the volume occupied by the negative electrode 10 in the anode-free type battery and improving the energy density, the average thickness of the negative electrode 10 is preferably 4.0 µm or more and 20.0 µm or less, 5.0 µm or more and 18.0 µm or less, or 6.0 µm or more and 15 µm or less.

### 2.1.2. Separator

The separator 20 of the anode-free type battery is not particularly limited as long as it has a function of physically and/or electrically isolating the positive electrode 30 and the negative electrode 10 and a function of ensuring the ion conductivity of lithium ions. Examples of such a separator include a porous member having insulating properties, a polymer electrolyte, a gel electrolyte, and an inorganic solid electrolyte, and typical examples thereof include at least one selected from the group consisting of a porous member having insulating properties, a polymer electrolyte, and a gel electrolyte. In addition, as the separator 20, one kind of member may be used alone, or two or more kinds of members may be used in combination.

As the separator 20 of the anode-free type battery, it is preferable that one kind of porous member having insulating properties, polymer electrolyte, or gel electrolyte is used alone, or two or more kinds thereof are used in combination. It is noted that in a case where the porous member having insulating properties is used alone as the separator 20, the lithium secondary battery needs to further include an electrolyte solution.

The above-described polymer electrolyte is not particularly limited, and examples thereof include a solid polymer electrolyte that mainly contains a polymer and an electrolyte, and a semi-solid polymer electrolyte that mainly contains a polymer, an electrolyte, and a plasticizer.

The gel electrolyte is not particularly limited; however, examples thereof include a gel electrolyte that mainly contains a polymer and a liquid electrolyte (that is, a solvent and an electrolyte).

The polymer that can be contained in the polymer electrolyte and the gel electrolyte is not particularly limited, and examples thereof include a polymer that contains a polar group such as a functional group containing an oxygen atom, such as an ether and an ester, a halogen group and a cyano group. Specific examples thereof include a resin having an ethylene oxide unit in a main chain and/or a side chain, such as polyethylene oxide (PEO), a resin having a propylene oxide unit in a main chain and/or a side chain, such as polypropylene oxide (PPO), an acrylic resin, a vinyl resin, an ester resin, a nylon resin, polyvinylidene fluoride (PVdF), polyacrylonitrile (PAN), polysiloxane, polyphosphazene, polymethyl methacrylate, polyamide, polyimide, aramid, polylactic acid, polyurethane, polyacetal, polysulfone, polyethylene carbonate, polypropylene carbonate, and polytetrafluoroethylene. One kind of such a resin as described above may be used alone, or two or more kinds thereof may be used in combination.

Examples of the electrolyte included in the polymer electrolyte and the gel electrolyte include salts of Li, Na, K, Ca, and Mg, and the like. Typically, in the present embodiment, the polymer electrolyte and the gel electrolyte contain a lithium salt.

The lithium salt is not particularly limited, and examples thereof include Lil, LiCl, LiBr, LiF, LiBF₄, LiPF₆, LiPF₂O₂, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂o₄)₂, LiB(O₂C₂H₄)F₂, LiB(OCOCF₃)₄, LiNO₃, and Li₂SO₄, and at least one selected from the group consisting of LiN(SO₂F)₂, LiN(SO₂CF₃)₂, and LiN(SO₂CF₃CF₃)₂ is preferable. One kind of such a salt or lithium salt as described above may be used alone, or two or more kinds thereof may be used in combination.

The blending ratio between the polymer and the lithium salt in the polymer electrolyte and the gel electrolyte may be determined according to the ratio of the lithium atom of the lithium salt to the polar group of the polymer. For example, the blending ratio may be determined according to the ratio ([Li]/[O]) of the number of lithium atoms in the lithium salt to the number of oxygen atoms in the polymer in a case where the polymer has an oxygen atom. In the polymer electrolyte and the gel electrolyte, the blending ratio between the polymer and the lithium salt can be adjusted so that the above-described ratio ([Li]/[O]) is, for example, 0.02 or more and 0.20 or less, 0.03 or more and 0.15 or less, or 0.04 or more and 0.12 or less.

The solvent contained in the gel electrolyte is not particularly limited; however, for example, a solvent that can be contained in the electrolyte solution described later can be used alone, or two or more kinds thereof can be used in combination. Examples of the preferred solvent are also the same as those in the electrolyte solution described later.

The plasticizer contained in the semi-solid polymer electrolyte is not particularly limited, and examples thereof include the same component as the solvent which can be contained in the gel electrolyte, and various oligomers.

In a case where the separator 20 includes the porous member having insulating properties, the pores of such a member are filled with a material having ion conductivity, whereby such a member exhibits ion conductivity. As a result, in the present embodiment, the filling is carried out with, for example, the electrolyte solution according to the present embodiment, a gel electrolyte containing the electrolyte solution according to the present embodiment, or the like.

The material that constitutes the porous member having insulating properties is not particularly limited, and examples thereof include a polymer material having insulating properties, and specific examples thereof include polyethylene (PE) and polypropylene (PP). That is, the separator 20 may be a porous polyethylene (PE) membrane, a porous polypropylene (PP) membrane, or a laminated structure thereof.

The separator 20 may be coated with a separator coating layer. The separator coating layer may coat both surfaces of the separator 20 or may coat only one surface. From the viewpoint of improving the cycle characteristics of the lithium secondary battery in the present embodiment, it is preferable to coat both surfaces of the separator 20. It is noted that the separator coating layer in the present embodiment is a film-shaped coating layer which is uniformly continuous, for example, a film-shaped coating layer which is uniformly continuous in an area of 50% or more of the surface of the separator 20.

The separator coating layer is not particularly limited, and for example, and it is preferably a separator containing a binder such as polyvinylidene fluoride (PVdF), a mixture of styrene butadiene rubber and carboxymethyl cellulose (SBR-CMC), or polyacrylic acid (PAA). In the separator coating layer, inorganic particles such as silica, alumina, titania, zirconia, or magnesium hydroxide may be added to the above-described binder.

The average thickness of the separator 20 including the separator coating layer is not particularly limited; however, it is, for example, 3.0 µm or more and 40.0 µm or less. In the lithium secondary battery, from the viewpoint of reducing the volume occupied by the separator 20 in the battery while reliably isolating the positive electrode 30 from the negative electrode 10, the average thickness of the separator 20 is preferably 5.0 µm or more and 30.0 µm or less, 7.0 µm or more and 10.0 µm or less, or 10.0 µm or more and 20.0 µm or less.

### 2.1.3. Electrolyte solution

The electrolyte solution of the anode-free type battery is not particularly limited as long as it is a liquid containing a solvent and an electrolyte and has ion conductivity. The electrolyte solution may be infiltrated into the separator 20, and such as one in which a laminate of the negative electrode 10, the separator 20, and the positive electrode 30 is sealed together with the electrolyte solution may be used as a finished product of the anode-free type battery.

As the electrolyte contained in the electrolyte solution, an electrolyte, which may be included in the polymer electrolyte and the gel electrolyte, in particular, one kind of the above-described lithium salt can be used alone, or two or more kinds thereof can be used in combination. The preferred lithium salt is the same as that in the polymer electrolyte and the gel electrolyte.

Examples of the solvent contained in the electrolyte solution include a non-aqueous solvent having a fluorine atom (hereinafter, referred to as a "fluorinated solvent") and a non-aqueous solvent having no fluorine atom (hereinafter, referred to as a "non-fluorinated solvent").

The fluorinated solvent is not particularly limited, and examples thereof include 1,1,2,2-tetrafluoroethyl-2,2,3,3-tetrafluoropropyl ether, 1,1,2,2-tetrafluoroethyl-2,2,2-trifluoroethyl ether, 1H,1H,5H-octafluoropentyl-1,1,2,2-tetrafluoroethyl ether, and the like.

The non-fluorinated solvent is not particularly limited, and examples thereof include triethylene glycol dimethyl ether, tetraethylene glycol dimethyl ether, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, and 12-crown-4.

Regarding the fluorinated solvent and/or the non-fluorinated solvent, one kind thereof can be used alone, or two or more kinds thereof can be used in any combination at any proportion. The content of the fluorinated solvent and the content of the non-fluorinated solvent are not particularly limited, and the proportion of the fluorinated solvent to the entire solvent may be 0% to 100% by volume, or the proportion of the non-fluorinated solvent to the entire solvent may be 0% to 100% by volume.

### 2.1.4. Use aspect

One use aspect of the lithium secondary battery including an anode-free type battery will be described. In one use aspect of the lithium secondary battery, a positive electrode terminal and a negative electrode terminal for connecting a battery to an external circuit are respectively joined to the current collector film 32A and the negative electrode 10. In the lithium secondary battery, charge/discharge are carried out by connecting the negative electrode terminal to one end of the external circuit and connecting the positive electrode terminal to the other end of the external circuit. In the positive electrode terminal and the negative electrode terminal, the lithium secondary battery is charged by applying such a voltage that a current flows from the negative electrode terminal (negative electrode) to the positive electrode terminal (positive electrode) through an external circuit. Regarding the lithium secondary battery after charging, the lithium secondary battery is discharged in a case where the positive electrode terminal and the negative electrode terminal are connected through a desired external circuit.

In the anode-free type battery, it is presumed that a solid electrolyte interfacial layer (SEI layer) is formed on the surface of the negative electrode 10 (the interface between the negative electrode 10 and the separator 20) by the initial charging; however, the battery may not have the SEI layer. In a case where the anode-free type battery is charged, the lithium metal is deposited at the interface between the negative electrode 10 and the SEI layer, the interface between the negative electrode 10 and the separator 20, and/or the interface between the SEI layer and the separator 20. In addition, in the anode-free type battery, the lithium metal deposited on the negative electrode 10 is electrolytically dissolved by discharging. In a case where the SEI layer is formed on the battery, the lithium metal deposited at at least one of the interface between the negative electrode 10 and the SEI layer and/or the interface between the SEI layer and the separator 20 is electrolytically dissolved.

### 2.1.5. Manufacturing method

The manufacturing method for the anode-free type battery is not particularly limited as long as it is a manufacturing method for a lithium secondary battery having the above-described configuration, and examples thereof include the following method.

First, the positive electrode 30 according to the present embodiment is obtained by the above-described manufacturing method for a positive electrode.

Next, the negative electrode 10 is obtained by washing a negative electrode material of the above-described anode-free type battery, for example, a metal foil having a thickness of 1.0 µm or more and 1.0 mm or less (for example, an electrolytic Cu foil) with a solvent containing sulfamic acid, subsequently punching the negative electrode material into a predetermined size, and further carrying out ultrasonic washing with ethanol, followed by carrying out drying.

Next, the separator 20 having the above-described configuration is prepared. The separator 20 may be manufactured by a method publicly known in the related art, or a commercially available separator may be used. In addition, a functional buffer layer, which is fibrous or porous and relieves volume expansion and contraction associated with the dissolution and deposition of lithium metal, may be provided between the separator 20 and the negative electrode 10. The functional buffer layer preferably has ion conductivity or electronic conductivity; however, it may not have ion conductivity or electronic conductivity.

A laminate is obtained by laminating the positive electrode 30, the separator 20, and the negative electrode 10 in this order so that the positive electrode 30 and the separator 20 face each other, where the positive electrode 30, the separator 20, and the negative electrode 10 are obtained as described above. An anode-free type battery can be obtained by sealing the obtained laminate together with an electrolyte solution in an airtight container. The airtight container is not particularly limited, and examples thereof include a laminated film.

### 2.2. Lithium metal battery

A lithium metal battery (hereinafter, also referred to as "LMB") is manufactured by using, as a negative electrode, an electrode having a lithium metal or a lithium metal alloy on a surface of the electrode or a simple body of the lithium metal. The LMB according to the present embodiment has the positive electrode 30 according to the present embodiment. In the LMB, similarly to the anode-free type battery, charge/discharge are carried out by depositing the lithium metal on the surface of the negative electrode and electrolytically dissolving the deposited lithium.

As described above, the LMB is different from the anode-free type battery in terms of the fact that, before initial charging of the battery, the negative electrode has a lithium metal as the negative-electrode active material.

The lithium metal battery according to the present embodiment includes the positive electrode 30 according to the present embodiment, a negative electrode having a lithium metal facing the positive electrode 30, a separator disposed between the positive electrode 30 and the negative electrode, and an electrolyte solution. The configurations of the electrolyte solution and the separator and the preferred aspects thereof are the same as those of the anode-free type battery, except for the points which will be described later.

The negative electrode of the LMB is not particularly limited as long as it contains a lithium metal or a lithium metal alloy. Since the LMB uses a negative electrode having a lithium metal or a lithium metal alloy, which has a large specific capacity and a low redox potential, the LMB is generally a battery having a higher energy density than a lithium ion battery. Examples of such a negative electrode include a lithium metal electrode, an electrode obtained by bonding a lithium metal foil rolled on a surface of a conductive metal foil such as copper to form a clad material, an electrode obtained by electrochemically depositing a lithium metal in advance on a surface of a metal foil such as copper, and an electrode obtained by subjecting metallic lithium to vacuum vapor deposition. From the viewpoint of further improving the effect of the present embodiment, an electrode obtained by bonding a lithium metal foil on a surface of a conductive metal such as copper, or an electrode obtained by electrochemically depositing a lithium metal is preferable, and an electrode obtained by bonding a lithium metal foil on a surface of a conductive metal such as copper is more preferable.

The average thickness of the negative electrode of the LMB is not particularly limited; however, it is, for example, 5.0 µm or more and 100.0 µm or less. The average thickness thereof is preferably 8.0 µm or more and 50.0 µm or less, 10.0 µm or more and 40.0 µm or less, or 10.0 µm or more and 20.0 µm or less from the viewpoint of improving the capacity and/or energy density of the battery.

The LMB may be produced by a publicly known material and a publicly known production method, or it may be produced in the same manner as the production method for the above-described anode-free type battery, except that a lithium metal or a lithium metal alloy is used for the negative electrode.

### 2.3. Lithium ion battery

A lithium ion battery (hereinafter, also referred to as "LIB") has a host material of a lithium element (a lithium ion or a lithium metal) in a negative electrode of the lithium ion battery, where such a material is filled with a lithium element by charging of the battery, and the battery is discharged in a case where the host material releases the lithium element. The LIB is different from the anode-free type battery in terms of the fact that, in particular, the negative electrode has a host material of a lithium element. The lithium ion battery can be manufactured by a publicly known material and a publicly known manufacturing method.

The shape of the battery included in the lithium secondary battery according to the present embodiment is not particularly limited, and it may be, for example, a sheet type, a laminated sheet type, a shape of a thin type, a shape of a bottomed cylinder type, a shape of a bottomed square type, or the like. From the viewpoint of further effectively and reliably exhibiting the effect of the present embodiment, a sheet type, a laminated sheet type, or a shape of a thin type is preferable. Examples

Hereinafter, the present invention will be described in more detail with reference to examples and comparative examples. The present invention is not limited by the following examples. In addition, unless otherwise specified, the procedures in the Examples were carried out at room temperature (25°C) and 10⁵ Pa.

### 1. Production of anode-free type lithium secondary battery

An anode-free type lithium secondary battery (AFB) of Example 1 was produced as follows.

### 1.1. Preparation of negative electrode

First, a rolled Cu foil having a thickness of 10 µm was prepared and punched into a predetermined size (45 mm x 45 mm) by punching processing to obtain a negative electrode 10.

### 1.2. Production of positive electrode

LiNi_{0.85}Co_{0.12}Mn_{0.03}O₂ was used as a material of the positive electrode active material particle. The particle diameters (D50) of the large particles and the small particles were produced to be the values shown in Table 1, respectively. Specifically, the positive-electrode active material particles were sieved to obtain the large particles and the small particles. By the sieving, the large particles and the small particles included 80% of the total number of particles in a range of ±0.5 µm of the target particle diameter (D50). In addition, the particle size distribution was measured using "MT-3000" manufactured by MicrotracBEL Corp., which is a laser diffraction type particle size distribution measuring instrument. 96 parts by mass of the prepared large particles and small particles having the mass ratios shown in Table 1, 2 parts by mass of the binder 1, and 2 parts by mass of the binder 2 were mixed to produce 100 parts by mass of a positive electrode mixture.

It is noted that regarding the large particle and the small particle, the D50 is compared, and a particle having a larger D50 is referred to as the large particle, and the other one is referred to as the small particle. Among the large particles, particles having a D50 of 10 µm or more and 25 µm or less are the particles L, and among the small particles, in a case where the median diameter D50 ratio of the small particles to the particles L is 0.75 or less, such small particles are the particles S.

Next, 1 µm of Al as the metal layer 322A was subjected to vapor deposition on both surfaces of a film-shaped polyethylene terephthalate (PET) having a thickness of 6 µm as the resin layer 320A to obtain a current collector film 32A. Then, the positive electrode mixture was applied onto both surfaces of the current collector film 32A at a weight per unit area of 20 mg/cm², and subjected to press molding at a linear pressure of 2 t/cm so that the density after pressing shown in Table 1 was obtained, thereby forming the positive electrode mixture layer 34A on both surfaces of the current collector film 32A, and obtaining a molded body. The obtained molded body was punched into a size of 40 x 40 mm by punching processing, thereby obtaining the positive electrode 30.

### 1.3. Preparation of separator

As the separator 20, a separator 20 having a predetermined size (50 mm x 50 mm), which was obtained by coating both surfaces of a 12 µm polyethylene microporous membrane with 2.0 µm polyvinylidene fluoride (PVdF), was prepared.

### 1.4. Preparation of electrolyte solution

As an electrolyte solution, a dimethoxyethane (DME) solution of 4 M LiN(SO₂F)₂ (LiFSI) was prepared.

### 1.5. Assembly of battery

Next, the respective components were laminated so that the positive electrode 30, the separator 20, and the negative electrode 10 were laminated in this order, thereby obtaining a laminate. Further, an Al terminal having a thickness of 100 µm and a Ni terminal having a thickness of 100 µm were joined to the current collector film 32A in the positive electrode 30 and the negative electrode 10, respectively, by ultrasonic welding, which was followed by insertion into the exterior body of the laminate. Next, the above-described electrolyte solution was injected into the above-described exterior body. The exterior body was sealed to obtain a lithium secondary battery.

A lithium secondary battery of each of Examples 2 to 9 and Comparative Examples 1 to 5 was obtained in the same manner as in Example 1, except that the large particles, the small particles, and the binder shown in Table 1 were used to carry out press molding at the pressure shown in Table 1. It is noted that in Comparative Example 4, the mass ratio of 10/0 and the particle diameter ratio of 1.00 indicate that one kind of positive-electrode active material particles was used from the viewpoint of D50. Specifically, in Comparative Example 4, 96 parts by mass of the positive-electrode active material particles having a D50 of 15 µm, 2 parts by mass of the binder 1, and 2 parts by mass of the binder 2 were mixed to produce 100 parts by mass of the positive electrode mixture.

It is noted that the abbreviations in Table 1 are each a notation corresponding to the following compound.
PVdF: polyvinylidene fluoride
VDF: vinylidene fluoride
TFE: Tetrafluoroethylene
HFP: hexafluoropropene
PTFE: polytetrafluoroethylene

In Table 1, AFB means the anode-free type battery. The mass ratio (large particles/small particles) means a mass ratio of the large particles to the small particles in the positive electrode 30 ([content of large particles in positive electrode 30]/[content of small particles in positive electrode 30]). In addition, the particle diameter ratio (small particles/large particles) means a D50 ratio of the small particles to the large particles ([median diameter D50 of small particles]/[median diameter D50 of large particles]). In addition, the particle diameter (large particles) means a median diameter D50 of the large particles.

The binders shown in Table 1 were produced as follows.

As the binder 1, Solef 5130 manufactured by Solvay S.A. was used.

The binder 2 was produced by mixing VDF, TFE, and HFP according to a suspension polymerization method.

### 2. Evaluation

### 2.1. Discharge rate (Rate characteristics)

The produced lithium secondary battery was subjected to CC charging at a current of 3 mA until the voltage reached 4.2 V, and then the battery was subjected to CC discharging at a current of 3 mA until the voltage reached 3.0 V (first cycle). It is noted that the CC charging is charging which is carried out at a constant current value, and the CC discharging is discharging which is carried out at a constant current value.

After the first cycle, CC charging was carried out at a current of 3 mA until the voltage reached 4.2 V, and then CC discharging was carried out at a current of 6 mA until the voltage reached 3.0 V (second cycle). After the second cycle, CC charging was carried out at a current of 3 mA until the voltage reached 4.2 V, and then CC discharging was carried out at a current of 30 mA until the voltage reached 3.0 V (third cycle). After the third cycle, CC charging was carried out at a current of 3 mA until the voltage reached 4.2 V, and then CC discharging was carried out at a current of 60 mA until the voltage reached 3.0 V (fourth cycle). After the fourth cycle, CC charging was carried out at a current of 3 mA until the voltage reached 4.2 V, and then CC discharging was carried out at a current of 120 mA until the voltage reached 3.0 V (fifth cycle). After the fifth cycle, CC charging was carried out at a current of 3 mA until the voltage reached 4.2 V, and then CC discharging was carried out at a current of 180 mA until the voltage reached 3.0 V (sixth cycle).

A ratio ([6th capacity]/[2nd capacity]) of a discharge capacity obtained from the sixth cycle of the CC discharging (hereinafter, also referred to as a "6th capacity") to a discharge capacity obtained from the second cycle of the CC discharging (hereinafter, also referred to as a "2nd capacity") was determined and described in the column of the discharge rate in Table 1.

**[Table 1]**

| | Cell type | Binder 1 | Binder 2 | Mass ratio (large particles/small particles) | Particle diameter ratio (small particles/large particles) | Particle diameter (large particles) | Density after pressing (g/cc) | Discharge rate |
|---|---|---|---|---|---|---|---|---|
| Example 1 | AFB | PVdF | (VDF)(TFE)(HFP) | 6/4 | 0.20 | 15 | 3.8 | 83 |
| Example 2 | AFB | PVdF | (VDF)(TFE)(HFP) | 7/3 | 0.50 | 15 | 3.8 | 86 |
| Example 3 | AFB | PVdF | (VDF)(TFE)(HFP) | 7/3 | 0.20 | 15 | 3.9 | 87 |
| Example 4 | AFB | PVdF | (VDF)(TFE)(HFP) | 7/3 | 0.10 | 15 | 3.9 | 87 |
| Example 5 | AFB | PVdF | (VDF)(TFE)(HFP) | 7/3 | 0.09 | 15 | 3.8 | 85 |
| Example 6 | AFB | PVdF | (VDF)(TFE)(HFP) | 9/1 | 0.20 | 15 | 3.7 | 84 |
| Example 7 | AFB | PVdF | (VDF)(TFE)(HFP) | 7/3 | 0.20 | 10 | 3.8 | 83 |
| Example 8 | AFB | PVdF | (VDF)(TFE)(HFP) | 7/3 | 0.20 | 25 | 3.8 | 80 |
| Example 9 | AFB | PVdF | PTFE | 7/3 | 0.20 | 15 | 3.9 | 87 |
| Comparative Example 1 | AFB | PVdF | (VDF)(TFE)(HFP) | 5/5 | 0.20 | 15 | 3.7 | 62 |
| Comparative Example 2 | AFB | PVdF | (VDF)(TFE)(HFP) | 7/3 | 0.20 | 27 | 3.7 | 67 |
| Comparative Example 3 | AFB | PVdF | Absent | 7/3 | 0.20 | 15 | 3.8 | 63 |
| Comparative Example 4 | AFB | PVdF | (VDF)(TFE)(HFP) | 10/0 | 1.00 | 15 | 3.7 | 65 |
| Comparative Example 5 | AFB | PVdF | (VDF)(TFE)(HFP) | 7/3 | 0.20 | 8 | 3.7 | 62 |

### 3. Evaluation results

It can be seen from Table 1 that Examples 1 to 9, each of which is a lithium secondary battery using the positive electrode 30 for a lithium secondary battery, exhibits a favorable discharge rate as compared with the comparative example, which is a lithium secondary battery using a positive electrode different from the positive electrode 30 for a lithium secondary battery, which includes a current collector film 32A including a resin layer 320A and a metal layer 322A provided on each of both surfaces of the resin layer 320A, and a positive electrode mixture layer 34A formed on the current collector film 32A, where the positive electrode mixture layer 34A contains positive-electrode active material particles L having a median diameter D50 of 10 µm or more and 25 µm or less, positive-electrode active material particles S, and two or more kinds of binders, a median diameter D50 ratio of the positive-electrode active material particles S to the positive-electrode active material particles L is 0.75 or less, and a mass ratio of the positive-electrode active material particles L to the positive-electrode active material particles S in the positive electrode ([a content of the positive-electrode active material particles L in the positive electrode]/[a content of the positive-electrode active material particles S in the positive electrode]) is 1.5 or more and 9.0 or less.

### 4. Production of lithium ion battery

Next, a lithium ion battery was examined.

A lithium ion battery (LIB) of Example 10 was produced as follows.

First, a negative electrode was produced. Cu of 1.0 µm was subjected to vapor deposition on both surfaces of a polyethylene terephthalate (PET) having a thickness of 6 µm, thereby producing a negative electrode current collector film. As the negative-electrode active material, a mixed material obtained by mixing, in water as a solvent, 97 parts by mass of graphite, 0.5 parts by mass of carbon black as a conductive auxiliary agent, and as a binder, 1.5 parts by mass of carboxymethyl cellulose (CMC) and 1.0 parts by mass of styrene-butadiene rubber (SBR), was used. Both surfaces of the negative electrode current collector film were coated with this mixed material so that the weight per unit area was 15 mg/cm², and then pressed and cut out to a predetermined size to produce a negative electrode. Next, a sheet (thickness: 15 µm) having a surface coated with a mixture of polyvinylidene fluoride (PVdF) and Al₂O₃ was prepared as a separator. Then, both surfaces of the negative electrode were sandwiched between the separators and pressed to obtain an intermediate laminate.

Next, a positive electrode was produced. LiNi_{0.85}Co_{0.12}Mn_{0.03}O₂ was used as a material of the positive electrode active material particle. The particle diameters (D50) of the large particles and the small particles were produced to be the values shown in Table 2, respectively. Specifically, the positive-electrode active material particles were sieved to obtain the large particles and the small particles. By the sieving, the large particles and the small particles included 80% of the total number of particles in a range of ±0.5 µm of the target particle diameter (D50). In addition, the particle size distribution was measured using "MT-3000" manufactured by MicrotracBEL Corp., which is a laser diffraction type particle size distribution measuring instrument. 96 parts by mass of the prepared large particles and small particles having the mass ratios shown in Table 2, and 2 parts by mass of the binder 1 and 2 parts by mass of the binder 2 shown in Table 2 were mixed to produce 100 parts by mass of a positive electrode mixture.

The positive electrode mixture was applied onto both surfaces of a film which had a film-shaped PET having a thickness of 6 µm, where both surfaces of the film-shaped PET had been subjected to vapor deposition with Al to have a thickness of 1.0 µm, at a weight per unit area of 23 mg/cm², and press molding was carried out at a linear pressure of 2 t/cm so that the density after pressing shown in Table 2 was obtained, whereby a molded body was obtained. The obtained molded body was punched into a predetermined size by punching processing to obtain a positive electrode.

Next, 21 sheets of the intermediate laminate and 20 sheets of the positive electrode laminate were alternately laminated. As the positive electrode tab, hard aluminum having a thickness of 0.2 mm was used. As the negative electrode tab, copper plated with nickel and having a thickness of 0.2 mm was used. Such a structural body was inserted into a laminated exterior body and sealed together with the electrolyte solution to obtain a lithium ion battery. As the electrolyte solution, an electrolyte solution, which was obtained by adding 2 parts by mass of vinylene carbonate (VC) with respect to 100 parts by mass of an electrolyte solution obtained by dissolving lithium hexafluorophosphate (LiPF₆) in a solvent in which ethylene carbonate (EC), dimethyl carbonate (DMC), and ethyl methyl carbonate (EMC) were mixed at 30:35:35 in terms of parts by mass so that the concentration of LiPF₆ was 1 M, was used.

### 5. Evaluation

The discharge rate was evaluated in the same manner as in the evaluation method in Table 1.

**[Table 2]**

| | Cell type | Binder 1 | Binder 2 | Mass ratio (large particles/small particles) | Particle diameter ratio (small particles/large particles) | Particle diameter (large particles) | Density after pressing (g/cc) | Discharge rate |
|---|---|---|---|---|---|---|---|---|
| Example 10 | LIB | PVdF | (VDF)(TFE)(HFP) | 7/3 | 0.20 | 15 | 3.9 | 87 |

### 6. Evaluation results

From Table 2, it can be seen that, even in the lithium ion battery, a favorable discharge rate is exhibited in a case of using a positive electrode for a lithium secondary battery that includes a current collector film including a resin layer and a metal layer provided on each of both surfaces of the resin layer, and a positive electrode mixture layer formed on the current collector film, where the positive electrode mixture layer contains positive-electrode active material particles L having a median diameter D50 of 10 µm or more and 25 µm or less, positive-electrode active material particles S, and two or more kinds of binders, a median diameter D50 ratio of the positive-electrode active material particles S to the positive-electrode active material particles L is 0.75 or less, and a mass ratio of the positive-electrode active material particles L to the positive-electrode active material particles S in the positive electrode ([a content of the positive-electrode active material particles L in the positive electrode]/[a content of the positive-electrode active material particles S in the positive electrode]) is 1.5 or more and 9.0 or less.

### Industrial Applicability

Since the lithium secondary battery which is produced using the positive electrode according to the embodiment of the present invention has excellent rate characteristics, the lithium secondary battery has industrial applicability as a positive electrode of a lithium secondary battery which is used for various applications.

### Reference Signs List

100: lithium secondary battery
10: negative electrode
20: separator
30A, B: positive electrode
32A: current collector film
320A: resin layer
322A: metal layer
34A: positive electrode mixture layer

## Claims

1. A positive electrode for a lithium secondary battery, comprising:
a current collector film including a resin layer and a metal layer provided on each of both surfaces of the resin layer; and
a positive electrode mixture layer formed on the current collector film,
wherein the positive electrode mixture layer contains first positive-electrode active material particles having a median diameter D50 of 10 µm or more and 25 µm or less, second positive-electrode active material particles, and two or more kinds of binders,
a median diameter D50 ratio of the second positive-electrode active material particles to the first positive-electrode active material particles ([a median diameter D50 of the second positive-electrode active material particles]/[a median diameter D50 of the first positive-electrode active material particles]) is 0.75 or less, and
a mass ratio of the first positive-electrode active material particles to the second positive-electrode active material particles in the positive electrode ([a content of the first positive-electrode active material particles in the positive electrode]/[a content of the second positive-electrode active material particles in the positive electrode]) is 1.5 or more and 9.0 or less.

2. The positive electrode for a lithium secondary battery according to Claim 1, wherein the metal layer is formed of aluminum.

3. The positive electrode for a lithium secondary battery according to Claim 1, wherein the mass ratio of the first positive-electrode active material particles to the second positive-electrode active material particles in the positive electrode ([the content of the first positive-electrode active material particles in the positive electrode]/[the content of the second positive-electrode active material particles in the positive electrode]) is 2.0 or more and 9.0 or less.

4. The positive electrode for a lithium secondary battery according to Claim 1, wherein the median diameter D50 ratio of the second positive-electrode active material particles to the first positive-electrode active material particles is 0.1 or more and 0.5 or less.

5. The positive electrode for a lithium secondary battery according to Claim 1, wherein the median diameter D50 of the first positive-electrode active material particles is 10 µm or more and 20 µm or less.

6. The positive electrode for a lithium secondary battery according to Claim 1, wherein the binder includes a first binder having vinylidene fluoride as a repeating unit and a second binder having tetrafluoroethylene as a repeating unit.

7. The positive electrode for a lithium secondary battery according to Claim 1, wherein a mass ratio of the second binder to the first binder in the positive electrode ([a content of the second binder in the positive electrode]/[a content of the first binder in the positive electrode]) is 1.0 or more and 10.0 or less.

8. A lithium secondary battery comprising:
the positive electrode according to any one of Claims 1 to 7.
